(19) Europäisches Patentamt
European Patent Office
Office européen des brevets

(11) **EP 4 604 524 A1**

(12) **EUROPEAN PATENT APPLICATION**
published in accordance with Art. 153(4) EPC

(43) Date of publication:
**20.08.2025 Bulletin 2025/34**

(21) Application number: **22961763.4**

(22) Date of filing: **13.10.2022**

(51) International Patent Classification (IPC):
**H04N 19/117** $^{(2014.01)}$

(52) Cooperative Patent Classification (CPC):
**H04N 19/117**

(86) International application number:
**PCT/CN2022/125229**

(87) International publication number:
**WO 2024/077574 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DAI, Zhenyu**
**Dongguan, Guangdong 523860 (CN)**

(74) Representative: **RGTH**
**Patentanwälte PartGmbB**
**Neuer Wall 10**
**20354 Hamburg (DE)**

(54) **NEURAL NETWORK BASED LOOP FILTER METHOD AND APPARATUS, VIDEO CODING METHOD AND APPARATUS, VIDEO DECODING METHOD AND APPARATUS, AND SYSTEM**

(57)    A neural network based loop filter method and apparatus, a video coding method and apparatus, a video decoding method and apparatus, and a system. When NNLF is performed on a reconstructed image, a coding end can select an NNLF mode in which chrominance information adjustment is performed, or an NNLF mode in which chrominance information adjustment is not performed; and according to a corresponding tag, a decoding end selects one of the modes to perform NNLF on the reconstructed image. Therefore, the coding performance can be improved.

FIG. 6

**Description**

**TECHNICAL FIELD**

Embodiments of this application relate to, but are not limited to, a video technology, and more specifically, to a neural network based loop filter method, and a video coding method and apparatus and system.

**BACKGROUND**

Digital video compression technologies are primarily used to compress huge amounts of digital image and video data, to facilitate efficient transmission and storage of the data. An image of an original video sequence includes a luma component and a chroma component. In a digital video encoding process, an encoder reads a monochrome or color image, and partitions a frame of image into largest coding units (LCU: largest coding unit) of a same size (for example, 128 $\times$ 128 or 64 $\times$ 64). The largest coding unit may be partitioned into a rectangular coding unit (CU: coding unit) according to a rule, and the coding unit may further be partitioned into a prediction unit (PU: prediction unit), a transform unit (TU: transform unit), and the like. A hybrid encoding framework includes a prediction (prediction) module, a transform (transform) module, a quantization (quantization) module, an entropy coding (entropy coding) module, a loop filtering (in loop filter) module, and the like. The prediction module may use intra prediction (intra prediction) and inter prediction (inter prediction). In intra prediction, pixel information in a current block is predicted based on information about a same image, so as to eliminate spatial redundancy. In inter prediction, motion vector information that best matches a current block may be searched through motion estimation based on information of different images, so as to eliminate time redundancy. A predicted residual may be converted into a frequency domain by performing transform, so that energy of the residual is redistributed, and information that is less perceptible to human eyes can be removed by further performing quantization, so as to eliminate visual redundancy. Entropy coding may eliminate character redundancy based on a current context model and probability information of a binary bitstream, so as to generate a bitstream.

The existing digital video compression standards can reduce a bandwidth requirement for transmitting video data. With the explosive growth of internet videos and an increasingly high demand of people for video definition, it is required to develop more advanced digital video compression technologies to further reduce bandwidth and traffic requirements for digital video transmission.

**SUMMARY**

The following is a summary of subjects detailed herein. The summary is not intended to limit the protection scope of the claims.

An embodiment of this application provides a neural network based loop filter (NNLF, Neural Network based Loop Filter) method, applied to a video decoding apparatus. The method includes:

decoding a first flag of a reconstructed image, where the first flag includes information about an NNLF mode used when NNLF is to be performed on the reconstructed image; and
determining, based on the first flag, the NNLF mode used when NNLF is to be performed on the reconstructed image, and performing NNLF on the reconstructed image based on the determined NNLF mode,
where the NNLF mode includes a first mode and a second mode, the second mode includes a chroma information adjustment mode; and compared with the first mode, the chroma information adjustment mode includes processing of performing specified adjustment on input chroma information before filtering.

An embodiment of this application further provides a video decoding method, applied to a video decoding apparatus. The method includes:
in a case that NNLF allows chroma information adjustment, performing NNLF on the reconstructed image by using the NNLF method applied to a decoding side according to any one of embodiments of this application.

An embodiment of this application further provides a neural network based loop filter method, applied to a video encoding apparatus. The method includes:

calculating a rate distortion cost of performing NNLF on an input reconstructed image by using a first mode and a rate distortion cost of performing NNLF on the reconstructed image by using a second mode; and
determining to perform NNLF on the reconstructed image by using a mode with a minimum rate distortion cost among the first mode and the second mode,
where both the first mode and the second mode are specified NNLF modes, the second mode includes a chroma information adjustment mode; and compared with the first mode, the chroma information adjustment mode includes processing of performing specified adjustment on input chroma information before filtering.

An embodiment of this application further provides a video encoding method, applied to a video encoding apparatus. The method includes:

in a case that NNLF allows chroma information adjustment, performing NNLF on the reconstructed image by using the NNLF method applied to an encoding side according to any one of embodiments of this application; and
encoding a first flag of the reconstructed image, where the first flag includes information about an NNLF mode used when NNLF is to be performed on the reconstructed image.

An embodiment of this application further provides a bitstream. The bitstream is generated by using the video encoding method according to any one of embodiments of this application.

An embodiment of this application further provides a neural network based loop filter, including a processor and a memory storing a computer program, where the computer program is executed by the processor to implement the neural network based loop filter method according to any one of embodiments of this application.

An embodiment of this application further provides a video decoding apparatus, including a processor and a memory storing a computer program, where the computer program is executed by the processor to implement the video decoding method according to any one of embodiments of this application.

An embodiment of this application further provides a video encoding apparatus, including a processor and a memory storing a computer program, where the computer program is executed by the processor to implement the video encoding method according to any one of embodiments of this application.

An embodiment of this application further provides a video coding system, including the video encoding apparatus according to any one of embodiments of this application and the video decoding apparatus according to any one of embodiments of this application.

An embodiment of this application further provides a non-transitory computer-readable storage medium. The computer-readable storage medium stores a computer program, and the computer program is executed by a processor to implement the neural network based loop filter method according to any one of embodiments of this application, or to implement the video decoding method according to any one of embodiments of this application, or to implement the video encoding method according to any one of embodiments of this application.

After reading and understanding the drawings and detailed descriptions, other aspects can be understood.

BRIEF DESCRIPTION OF DRAWINGS

The drawings are used to provide an understanding of embodiments of this application and form a part of the specification, and explain technical solutions of this application together with the embodiments of this application, and do not constitute a limitation on the technical solutions of this application.

FIG. 1A is a schematic diagram of a coding system according to an embodiment, FIG. 1B is a block diagram of an encoding side in FIG. 1A, and FIG. 1C is a block diagram of a decoding side in FIG. 1A.
FIG. 2 is a module diagram of a filter unit according to an embodiment.
FIG. 3A is a diagram of a network structure of an NNLF filter according to an embodiment, FIG. 3B is a structural diagram of a residual block in FIG. 3A, and FIG. 3C is a schematic diagram of input and output of the NNLF filter in FIG. 3A.
FIG. 4A is a structural diagram of a backbone network in an NNLF filter according to another embodiment, FIG. 4B is a structural diagram of a residual block in FIG. 4A, and FIG. 4C is a schematic diagram of input and output of the NNLF filter in FIG. 4A.
FIG. 5 is a schematic diagram of arrangement of a feature picture of input information.
FIG. 6 is a flowchart of an NNLF method applied to an encoding side according to an embodiment of this application.
FIG. 7 is a module diagram of a filter unit according to an embodiment of this application.
FIG. 8 is a flowchart of a video encoding method according to an embodiment of this application.
FIG. 9 is a flowchart of an NNLF method applied to a decoding side according to an embodiment of this application.
FIG. 10 is a flowchart of a video decoding method according to an embodiment of this application.
FIG. 11 is a schematic structural diagram of hardware of an NNLF filter according to an embodiment of this application.
FIG. 12A is a schematic diagram of input and output of an NNLF filter when an order of chroma information is not adjusted according to an embodiment of this application.
FIG. 12B is a schematic diagram of input and output of an NNLF filter when an order of chroma information is not adjusted according to an embodiment of this application.

## DESCRIPTION OF EMBODIMENTS

This application provides descriptions of a plurality of embodiments, but the descriptions are illustrative, rather than restrictive. In addition, it is obvious for those of ordinary skill in the art that there may be more embodiments and implementations within the scope of the embodiments described in this application.

In the descriptions of this application, terms such as "exemplary" or "for example" are used to represent an example, an instance, or an illustration. Any embodiment described as "exemplary" or "for example" in this application should not be construed as being more preferred or advantageous than other embodiments. In this specification, the term "and/or" is a description of an association relationship between associated objects, and represents that there may be three relationships. For example, A and/or B may represent three cases: only A exists, both A and B exist, and only B exists. "A plurality of" means two or more than two. In addition, to clearly describe the technical solutions in embodiments of this application, terms, such as "first" and "second", are used to distinguish between same items or similar items that have the substantially same function and usage. Those skilled in the art may understand that the terms, such as "first" and "second", are not intended to limit a quantity or execution order; and the terms, such as "first" and "second", do not indicate a definite difference.

When representative exemplary embodiments are described, methods and/or processes may be presented as specific sequences of steps in the specification. However, to an extent that the methods or processes are independent of the specific order of the steps described herein, the methods or processes should not be limited to the steps in the specific order. As those of ordinary skill in the art will understand that other step sequences are also possible. Therefore, the specific order of the steps described in the specification should not be interpreted as a limitation on the claims. In addition, the claims for the methods and/or processes should not be limited to steps being performed in the described order. Those skilled in the art can easily understand that the order of the steps may vary and the steps performed in the varied order shall fall within the spirit and scope of embodiments of this application.

The neural network based loop filter method and the video coding method in embodiments of this application may be applied to various video coding standards, such as H.264/Advanced Video Coding (advanced video coding, AVC), H.265/High Efficiency Video Coding (high efficiency video coding, HEVC), H.266/Versatile Video Coding (versatile video coding, VVC), and AVS (Audio Video coding Standard, audio video coding standard), and other standards formulated by the MPEG (Moving Picture Experts Group, moving picture experts group), AOM (alliance for open media, Alliance for Open Media), and JVET (joint video experts team, Joint Video Experts Team) and their extensions, or any other customized standards.

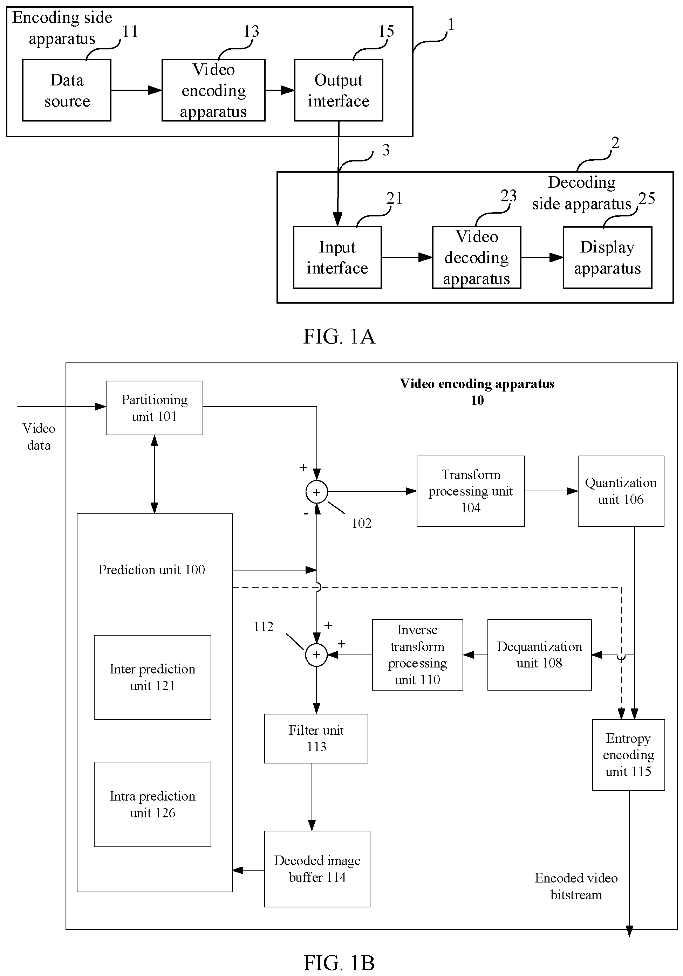

FIG. 1A is a block diagram of a video coding system applicable to an embodiment of this application. As shown in FIG. 1A, the system includes an encoding side 1 and a decoding side 2, with the encoding side 1 generating a bitstream. The decoding side 2 may decode the bitstream. The decoding side 2 may receive the bitstream from the encoding side 1 via a link 3. The link 3 includes one or more media or apparatuses that can move the bitstream from the encoding side 1 to the decoding side 2. In an example, the link 3 includes one or more communication media that causes the encoding side 1 to directly transmit the bitstream to the decoding side 2. The encoding side 1 modulates the bitstream according to a communications standard, and transmits the modulated bitstream to the decoding side 2. The one or more communication media may include wireless and/or wired communication media, which may constitute a part of a packet network. In another example, the bitstream may alternatively be output from an output interface 15 to a storage apparatus. The decoding side 2 may read the stored data from the storage apparatus through streaming or downloading.

As shown in FIG. 1A, the encoding side 1 includes a data source 11, a video encoding apparatus 13, and the output interface 15. The data source 11 includes a video capture apparatus (for example, a camera), an archive containing previously captured data, a feed interface configured to receive data from a content provider, a computer graphics system configured to generate data, or a combination of these sources. The video encoding apparatus 13 may also be referred to as a video encoder, and is configured to encode data from the data source 11 and output the encoded data to the output interface 15. The output interface 15 may include at least one of a regulator, a modem, or a transmitter. The decoding side 2 includes an input interface 21, a video decoding apparatus 23, and a display apparatus 25. The input interface 21 includes at least one of a receiver or a modem. The input interface 21 may receive the bitstream from the storage apparatus via the link 3. The video decoding apparatus 23 is also referred to as a video decoder, and is configured to decode the received bitstream. The display apparatus 25 is configured to display the decoded data. The display apparatus 25 may be integrated with or separate from another apparatus of the decoding side 2. The display apparatus 25 is optional for the decoding side. In another example, the decoding side may include another apparatus or device to which the decoded data is applied.

FIG. 1B is a block diagram of an exemplary video encoding apparatus applicable to an embodiment of this application. As shown in FIG. 1B, the video encoding apparatus 10 includes a prediction unit 101, a prediction unit 100, a residual generation unit 102, a transform processing unit 104, a quantization unit 106, a dequantization unit 108, an inverse transform unit 110, a reconstruction unit 112, a filter unit 113, a decoded image buffer 114 and an entropy encoding unit 115..

The partitioning unit 101 is configured to coordinate with the prediction unit 100 to partition received video data into slices (Slice), coding tree units (CTU: Coding Tree Unit), or other larger units. The received video data may be a video sequence that includes video frames such as I-frames, P-frames, or B-frames.

The prediction unit 100 is configured to partition a CTU into coding units (CU: Coding Unit) and perform intra prediction encoding or inter prediction encoding on the CUs. To perform intra prediction and inter prediction on a CU, the CU may be partitioned into one or more prediction units (PU: prediction unit).

The prediction unit 100 includes an inter prediction unit 121 and an intra prediction unit 126.

The inter prediction unit 121 is configured to perform inter prediction on a PU to generate predicted data for the PU. The predicted data includes a predicted block for the PU, motion information of the PU, and various syntax elements. The inter prediction unit 121 may include a motion estimation (ME: motion estimation) unit and a motion compensation (MC: motion compensation) unit. The motion estimation unit may be configured to perform motion estimation to generate a motion vector, and the motion compensation unit may be configured to obtain or generate a predicted block based on the motion vector.

The intra prediction unit 126 is configured to perform intra prediction on a PU to generate predicted data for the PU. The predicted data for the PU may include a predicted block for the PU and various syntax elements.

The residual generation unit 102 (represented by a circle containing a plus symbol behind the partitioning unit 101 in FIG. 1B) is configured to generate a residual block for a CU by subtracting the predicted block for the PU obtained by partitioning the CU, from an original block of the CU.

The transform processing unit 104 is configured to partition a CU into one or more transform units (TU: Transform Unit), and partitioning of prediction units may be different from that of transform units. A residual block associated with a TU is a sub-block obtained by partitioning the residual block for the CU. A coefficient block associated with the TU is generated by applying one or more transforms on the residual block associated with the TU.

The quantization unit 106 is configured to quantize a coefficient in the coefficient block based on a quantization parameter, and change a degree of quantization of the coefficient block by adjusting the quantization parameter (QP: Quantizer Parameter).

The dequantization unit 108 and the inverse transform unit 110 are respectively configured to apply dequantization and inverse transform to the coefficient block to obtain a reconstructed residual block associated with the TU.

The reconstruction unit 112 (represented by a circle containing a plus symbol behind the inverse transform processing unit 110 in FIG. 1B) is configured to add the reconstructed residual block and the predicted block generated by the prediction unit 100, to generate a reconstructed image.

The filter unit 113 is configured to perform loop filtering on the reconstructed image.

The decoded picture buffer 114 is configured to store the reconstructed image subjected to the loop filtering. The intra prediction unit 126 may extract a reference picture of a block adjacent to a current block from the decoded picture buffer 114 to perform intra prediction. The inter prediction unit 121 may perform inter prediction on a PU of an image of a current frame by using a reference picture of a previous frame buffered in the decoded image buffer 114.

The entropy encoding unit 115 is configured to perform an entropy encoding operation on received data (for example, a syntax element, a quantized coefficient block, or motion information) to generate a video bitstream.

In another example, the video encoding apparatus 10 may include more, fewer, or different function components than those shown in this example. For example, the transform processing unit 104 and the inverse transform processing unit 110 may not be included.

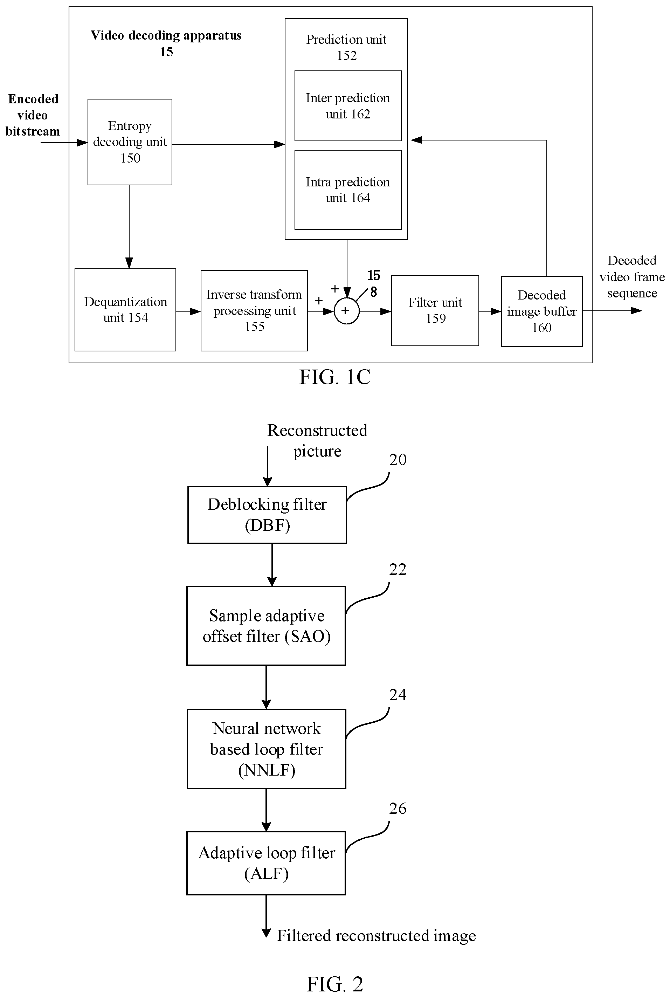

FIG. 1C is a block diagram of an exemplary video decoding apparatus applicable to an embodiment of this application. As shown in FIG. 1C, the video decoding apparatus 15 includes: an entropy decoding unit 150, a dequantization unit 154, an inverse transform processing unit 156, a prediction unit 152, a reconstruction unit 158, a filter unit 159, and a decoded image buffer 160.

The entropy decoding unit 150 is configured to perform entropy decoding on a received encoded video bitstream, to extract a syntax element, a quantized coefficient block, motion information of a PU, and the like. The prediction unit 152, the dequantization unit 154, the inverse transform processing unit 156, the reconstruction unit 158, and the filter unit 159 may each perform corresponding operations based on a syntax element extracted from the bitstream.

The dequantization unit 154 is configured to perform dequantization on a quantized coefficient block associated with a TU.

The inverse transform processing unit 156 is configured to apply one or more inverse transforms on an inverse quantized coefficient block to generate a reconstructed residual block for the TU.

The prediction unit 152 includes an inter prediction unit 162 and an intra prediction unit 164. If intra prediction encoding is used for a current block, the intra prediction unit 164 determines an intra prediction mode for the PU based on a syntax element decoded from the bitstream, and performs intra prediction based on reconstructed reference information of a block adjacent to the current block that is obtained from a decoded picture buffer 160. If inter prediction encoding is used for the current block, the inter prediction unit 162 determines a reference block of the current block based on motion information of the current block and a corresponding syntax element, and performs inter prediction on the reference block obtained from the decoded picture buffer 160.

The reconstruction unit 158 (represented by a circle containing a plus symbol behind the inverse transform processing unit 155 in FIG. 1C) is configured to obtain a reconstructed image based on the reconstructed residual block associated with the TU and the predicted block for the current block that is generated by the prediction unit 152 by performing intra prediction or inter prediction.

The filter unit 159 is configured to perform loop filtering on the reconstructed image.

The decoded picture buffer 160 is configured to store the reconstructed image subjected to the loop filtering, as a reference picture for subsequent motion compensation, intra prediction, inter prediction, and the like, and may also output the filtered reconstructed image, as decoded video data, to display the reconstructed image on the display apparatus.

In another embodiment, the video decoding apparatus 15 may include more, fewer, or different function components. For example, in some cases, the inverse transform processing unit 155 may not be included.

By using the video encoding apparatus and the video decoding apparatus described above, the following basic coding process may be performed. On the encoding side, a frame of image is divided into blocks, intra prediction, inter prediction, or another algorithm is applied to a current block to generate a predicted block for the current block, a residual block is obtained by subtracting the predicted block from an original block of the current block, the residual block is transformed and quantized to obtain a quantized coefficient, and the quantized coefficient is entropy encoded to generate a bitstream. On the decoding side, intra prediction or inter prediction is performed on the current block to generate a predicted block for the current block. The quantized coefficient obtained from the decoded bitstream is dequantized and inverse-transformed to obtain a residual block, the predicted block and the residual block are added to obtain reconstructed blocks, reconstructed blocks form a reconstructed image, and loop filtering is performed on the reconstructed image in a unit of the picture or ablock, to obtain a decoded image. The encoding side performs similar operations as the decoding side to obtain the decoded picture, which may also be referred to as the reconstructed image subjected to the loop filtering. The reconstructed image subjected to the loop filtering may serve as a reference frame for performing inter prediction on a subsequent frame. Block partitioning information, prediction, transform, quantization, entropy encoding, loop filtering, and other mode information and parameter information determined on the encoding side may be written into the bitstream. The decoding side determines the block partitioning information, prediction, transform, quantization, entropy encoding, loop filtering, and other mode information and parameter information used by the encoding side by decoding the bitstream or analyzing specified information, thereby ensuring that the decoded picture obtained on the encoding side is the same as the decoded picture obtained on the decoding side.

Although a block-based hybrid encoding framework is used as an example above, embodiments of this application are not limited thereto. With the development of technologies, one or more modules in the framework and one or more steps in the process may be replaced or optimized.

Embodiments of this application relate to but are not limited to the foregoing filter unit (the filter unit may also be referred to as an loop filtering module) in the encoding side and the decoding side, and the corresponding loop filtering method.

In an embodiment, the filter unit in the encoding side and the decoding side further includes components such as a deblocking filter (DBF: DeBlocking Filter) 20, a sample adaptive offset (SAO: Sample adaptive Offset) filter 22, and an adaptive loop filter (ALF: Adaptive loop filter) 26, and further includes a neural network based loop filter (NNLF, Neural Network based Loop Filter) 26 arranged between the SAO and the ALF, as shown in FIG. 2. The filter unit performs loop filtering on a reconstructed image, thereby compensating for distortion information and providing a better reference for subsequent pixel encoding.

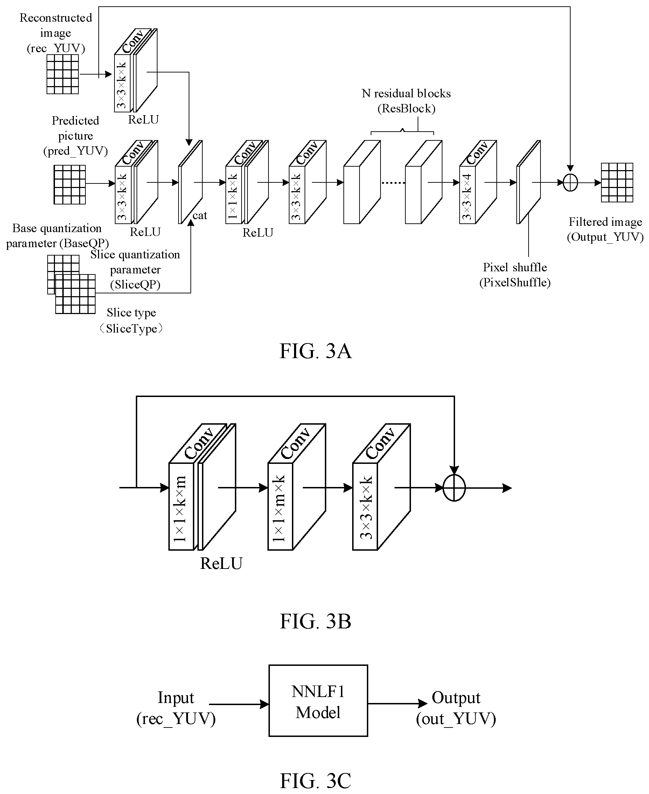

An exemplary embodiment provides a neural network based loop filter NNLF scheme in which a used model (also referred to as a network model) uses a filtering network shown in FIG. 3A. The NNLF is denoted as an NNLF1 and a filter for executing the NNLF1 is referred to as an NNLF1 filter. As shown in FIG. 3A, a backbone network (backbone) of the filtering network includes a plurality of residual blocks (ResBlock) that are sequentially connected, and further includes a convolutional layer (represented by Conv in FIG. 3A), an activation function layer (for example, ReLU in FIG. 3A), a concatenation (concat) layer (represented by Cat in FIG. 3A), and a pixel shuffle layer (represented by Pixel Shuffle in FIG. 3A). A structure of each residual block is shown in FIG. 3B, and includes a convolutional layer whose convolutional core size is $1 \times 1$, an ReLU layer, a convolutional layer whose convolutional core size is $1 \times 1$, and a convolutional layer whose convolutional core size is $3 \times 3$.

As shown in FIG. 3A, input of the NNLF1 filter includes luma information (a Y component) and chroma information (a U component and a V component) of a reconstructed image (rec_YUV), and various auxiliary information such as luma information and chroma information, QP information, and frame type information of a predicted image (pred_YUV). The QP information includes a default base quantization parameter (BaseQP: Base Quantization Parameter) in an encoding configuration file and a slice quantization parameter (SliceQP: Slice Quantization Parameter) of a current slice, and the frame type information includes a slice type (SliceType), that is, a type of a frame to which the current slice belongs. Output of the model is a filtered picture (output_YUV) obtained by performing filtering by the NNLF1, and the filtered picture output by the NNLF1 filter may also serve as a reconstructed image to be input to a subsequent filter.

The NNLF1 uses one model to filter YUV components (rec_YUV) of the reconstructed image to output YUV components (out_YUV) of the filtered picture, and auxiliary input information such as YUV components of the predicted image is omitted in FIG. 3C. As shown in FIG. 3A, the filtering network of the model has a hop connection branch between the input reconstructed image and the output filtered image.

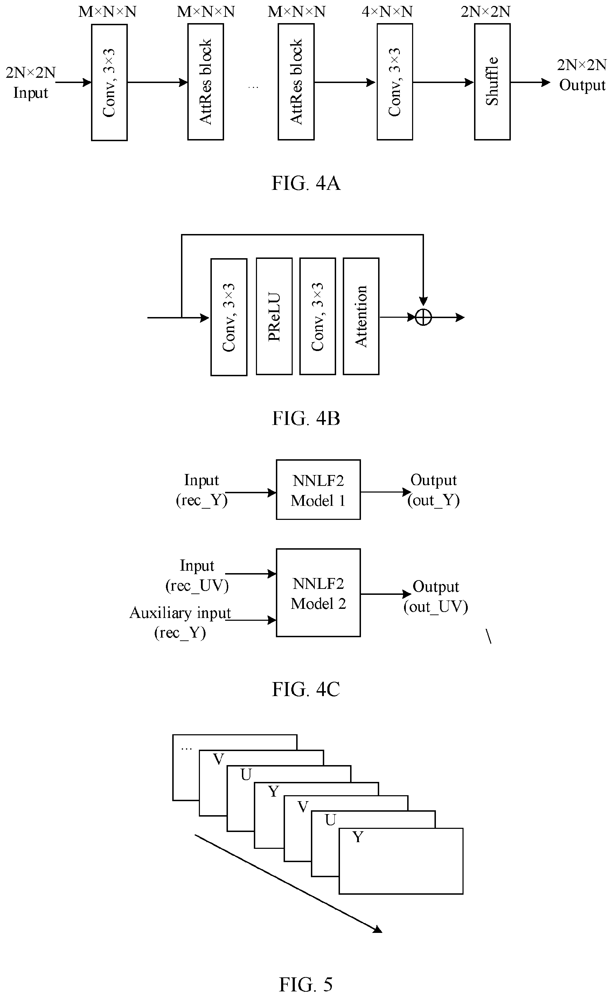

Another exemplary embodiment provides another NNLF scheme, denoted as an NNLF2. The NNLF2 needs to train two models separately. One model is used to filter a luma component of a reconstructed image, and the other model is used to filter two chroma components of the reconstructed image. The two models may use a same filtering network. There is also a hop connection branch between a reconstructed image input to an NNLF2 filter and a filtered image output by the NNLF2 filter. As shown in FIG. 4A, a backbone network of the filtering network includes a plurality of residual blocks (AttRes Block) with an attention mechanism that are sequentially connected, a convolutional layer (Conv 3×3) for implementing feature mapping, and a shuffle layer (Shuffle). A structure of a residual block with an attention mechanism is shown in FIG. 4B, and the residual block includes a convolutional layer (Conv 3×3), an activation layer (PReLU), a convolutional layer (Conv 3×3), and an attention layer (Attintion) that are sequentially connected, where M represents a quantity of feature pictures, and N represents a quantity of samples in one dimension.

A model 1 used by the NNLF2 to filter the luma component of the reconstructed image is shown in FIG. 4C, where input information of the model 1 includes the luma component (rec_Y) of the reconstructed image, output of the model 1 is a luma component (out_Y) of a filtered image, and auxiliary input information such as the luma component of the predicted image is omitted in FIG. 4C. A model 2 used by the NNLF2 to filter two chroma components of the reconstructed image is shown in FIG. 4C, where input information of the model 2 includes the two chroma components (rec_UV) of the reconstructed image and the luma component (rec_Y) of the reconstructed image that is used as auxiliary input information, and output of the model 2 is two chroma components (out_UV) of the filtered picture. The model 1 and the model 2 may further include other auxiliary input information, such as QP information, a block partition image, and de-block filtering boundary strength information.

The foregoing NNLF1 scheme and NNLF2 scheme may be implemented by using neural network based common software (NCS: Neural Network based Common Software) in neural network based video coding (NNVC: Neural Network based Video Coding), and are used a base tool in a reference software test platform of the NNVC, that is, a base NNLF.

As described above, in the NNLF1 and the NNLF2, for the luma component and the chroma component of the reconstructed image input to the neural network, the NNLF1 uses a manner of joint input, and only one network model needs to be trained, as shown in FIG. 3C. In the NNLF2, the luma component and the chroma component of the reconstructed image are separately input, and two models need to be trained, as shown in FIG. 4C. For the two chroma components: the U component and the V component, the NNLF1 and the NNLF2 both adopt the manner of joint input, that is, there is a binding relationship. As shown in FIG. 5, when stacked feature pictures are input to a model for prediction and output, three components in each frame of image are arranged in an order of Y, U, and V, with the U component preceding the V component. At present, there is a lack of scheme to study impact of adjusting an input order of the U component and the V component on the neural network.

Embodiments of this application provide a method for adjusting chroma information. Chroma information input to an NNLF filter is adjusted, for example, an order of a U component and a V component is interchanged, thereby further optimizing encoding performance of the NNLF filter.

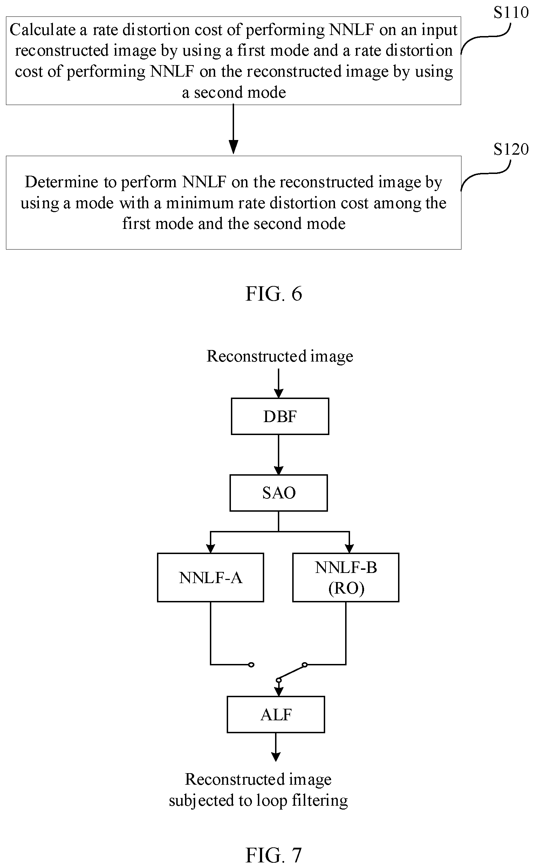

An embodiment of this application provides a neural network based loop filter NNLF method, applied to a video encoding apparatus. As shown in FIG. 6, the method includes the steps S110 and S120,

In step S110, a rate distortion cost of performing NNLF on an input reconstructed image by using a first mode and a rate distortion cost of performing NNLF on the reconstructed image by using a second mode are calculated.

In step S120, it is determined to perform NNLF on the reconstructed image by using a mode with a minimum rate distortion cost among the first mode and the second mode.

Both the first mode and the second mode are specified NNLF modes, the second mode includes a chroma information adjustment mode; and compared with the first mode, the chroma information adjustment mode includes processing of performing specified adjustment on input chroma information before filtering.

Tests have proved that encoding performance may be affected by adjusting the input chroma information. In this embodiment, based on rate distortion costs, an optimal mode can be selected from the second mode in which chroma information adjustment is performed and the first mode in which chroma information adjustment is not performed, thereby improving encoding performance.

In an exemplary embodiment of this application, the operation performing the specified adjustment on the chroma information includes any one or more of s:

interchanging an order of two chroma components of the reconstructed image, for example, adjusting an order of a U component preceding a V component to an order of the V component preceding the U component; and
calculating a weighted average value and a square error value of the two chroma components of the reconstructed image, and using the weighted average value and the square error value as the input chroma information in the NNLF mode.

In an exemplary embodiment of this application, the reconstructed image is a reconstructed image of a current frame or a current slice (slice) or a current block, and may alternatively be a reconstructed image of another encoding unit. The reconstructed image on which NNLF is performed in this application may belong to encoding units at different levels, such as an image -level (including a frame or a slice) encoding unit, or a block-level encoding unit.

In an exemplary embodiment of this application, network structures of models used in the first mode and the second mode are the same or different.

In an exemplary embodiment of this application, the second mode further includes a chroma information fusion mode, and training data for training a model in the chroma information fusion mode includes expanded data obtained after the specified adjustment is performed on the chroma information of the reconstructed image in original data, or includes the original data and the expanded data; and

a network model used in the first mode is obtained through training by using the original data (that is, supplementary data obtained after chroma information adjustment is not used as training data).

In an exemplary embodiment of this application, the second mode further includes a chroma information adjustment and fusion mode;

compared with the first mode, the chroma information adjustment and fusion mode includes processing of performing specified adjustment on input chroma information before filtering, and training data used for training a model in the chroma information fusion mode includes expanded data obtained after the specified adjustment is performed on the chroma information of the reconstructed image in original data, or includes the original data and the expanded data; and

a network model used in the first mode is obtained through training by using the original data.

In an exemplary embodiment of this application, there is one first mode, and there is one or more second modes;

the operation of calculating the rate distortion cost $cost_1$ of performing NNLF on the input reconstructed image by using the first mode includes: obtaining a first filtered picture that is output after NNLF is performed on the reconstructed image by using the first mode, and calculating $cost_1$ based on a difference between the first filtered picture and a corresponding original picture; and

the operation of calculating the rate distortion cost $cost_2$ of performing NNLF on the reconstructed image by using the second mode includes: for one of the second mode, obtaining a second filtered picture that is output after NNLF is performed on the reconstructed image by using the second mode, and calculating $cost_2$ of the second mode based on a difference between the second filtered picture and the original picture.

In an example of this embodiment, there is a plurality of second modes; and a mode with a minimum rate distortion cost among the first mode and the second mode is a mode corresponding to a minimum value of $cost_1$ and a plurality of $cost_2$ calculated.

In an example of this embodiment, the difference is represented by a sum of squared differences (SSD). In another example, the difference may alternatively be represented by another indicator such as a mean squared error (MSE: Mean Squared Error) or a mean absolute error (MAE: Mean Absolute Error). This is not limited in this application. The same applies to other embodiments of this application.

In an exemplary embodiment of this application, the method further includes: using a filtered picture obtained when NNLF is performed on the reconstructed image by using a mode with a minimum rate distortion cost, as a filtered image that is output after NNLF is performed on the reconstructed image.

In an exemplary embodiment of this application, an NNLF filter used by an encoding side and/or a decoding side to perform NNLF processing is disposed after a deblocking filter or a sample adaptive offset filter and before an adaptive loop filter. In an example of this embodiment, a structure of a filter unit (or referred to as a loop filter module, referring to FIG. 1B and FIG. 1C) is shown in FIG. 7. In FIG. 7, DBF represents the deblocking filter, SAO represents the sample adaptive offset filter, and ALF represents the adaptive loop filter. NNLF-A represents an NNLF filter using the first mode, and NNLF-B represents an NNLF filter using the second mode such as a chroma information adjustment mode, which may also be referred to as a chroma information adjustment module (Chroma Adjustment, CA). The NNLF-A filter may be the same as the foregoing NNLF filter that does not perform chroma information adjustment such as the NNLF1 or the NNLF2.

Although the NNLF-A filter and the NNLF-B filter are represented in FIG. 7, one model may be used in actual implementation, and the NNLF-B filter may be considered as an NNLF-A filter including chroma information adjustment. Based on this model, in a case that the input chroma information is not adjusted (for example, interchanging an order of U and V), loop filtering is performed by using this model (that is, NNLF is performed on the reconstructed image by using the first mode, or NNLF is performed on the reconstructed image by using the NNLF-A filter), and the rate distortion cost $cost_1$

is calculated based on the difference between the output first filtered picture and the original picture, such as a sum of squared differences (SSD); and in a case that the input chroma information is adjusted, loop filtering is performed by using this model (that is, NNLF is performed on the reconstructed image by using the second mode, or NNLF is performed on the reconstructed image by using the NNLF-B filter), and the rate distortion cost $cost_2$ is calculated based on the difference between the output second filtered image and the original picture, so that an NNLF mode to be used can be determined based on values of $cost_1$ and $cost_2$. Information about the NNLF mode to be used (that is, the selected NNLF mode) is represented by a first flag, and is encoded into a bitstream for reading by a decoder. On the decoding side, an NNLF mode actually used by the encoding side is determined by decoding the first flag, and NNLF is performed on the input reconstructed image by using the determined NNLF mode.

For example, in a case of $cost_1 < cost_2$, NNLF is performed on the reconstructed image by using the first mode; in a case of $cost_2 < cost_1$, NNLF is performed on the reconstructed image by using the second mode; and in a case of $cost_1 = cost_2$, NNLF is performed on the reconstructed image by using the first mode or the second mode.

During loop filtering, some or all of the DBF, the SAO and the ALF may be disabled. In addition, a deployment location of the NNLF filter is not limited to the location in FIG. 7. It is easy to understand that implementation of the NNLF method in this application is not limited to the deployment location of the NNLF filter. In addition, a filter in the filter unit is not limited to the filter shown in FIG. 7, and there may be more or fewer filters, or another type of filter is used.

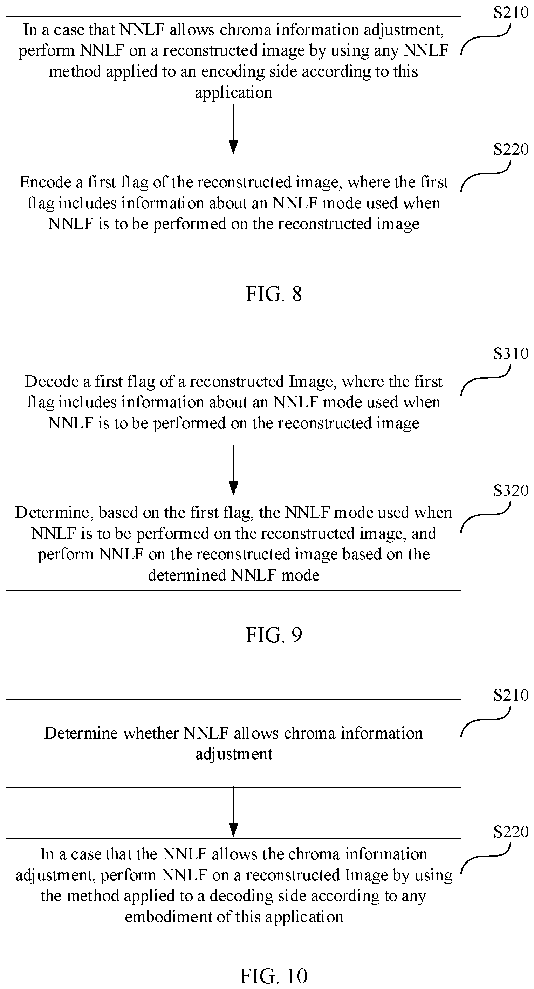

An embodiment of this application further provides a video encoding method, applied to a video encoding apparatus. The method includes steps S210 and S220 as shown in FIG. 8.

In step S210, in a case that NNLF allows chroma information adjustment, NNLF is performed on the reconstructed image by using any NNLF method applied to an encoding side according to this application.

In step S220, a first flag of the reconstructed picture is encoded, where the first flag includes information about an NNLF mode used when NNLF is to be performed on the reconstructed image.

Both the first mode and the second mode are specified NNLF modes, the second mode includes a chroma information adjustment mode; and compared with the first mode, the chroma information adjustment mode includes processing of performing specified adjustment on input chroma information before filtering.

In this embodiment, based on rate distortion costs, an optimal mode can be selected from the second mode in which chroma information adjustment is performed and the first mode in which chroma information adjustment is not performed, and information about the selected mode is encoded into a bitstream, thereby improving encoding performance.

In an exemplary embodiment of this application, the first flag is a picture-level syntax element or a block-level syntax element.

In an exemplary embodiment of this application, the operation of determining whether the NNLF allows the chroma information adjustment comprises:

decoding a sequence-level chroma information adjustment enable flag to determine whether the NNLF allows the chroma information adjustment; or
decoding a picture-level chroma information adjustment enable flag to determine whether the NNLF allows the chroma information adjustment.

In an exemplary embodiment of this application, the method further includes: in a case that it is determined that the NNLF does not allow the chroma information adjustment, performing NNLF on the reconstructed image by using the first mode, and skipping encoding the chroma information adjustment enable flag.

In an exemplary embodiment of this application, the second mode is a chroma information adjustment mode, and the first flag is used to indicate whether to perform chroma information adjustment when NNLF is performed on the reconstructed image;
where the operation of encoding the first flag of the reconstructed image includes: in a case that it is determined to perform NNLF on the reconstructed image by using the first mode, setting the first flag to a value indicating not to perform chroma information adjustment; and in a case that it is determined to perform NNLF on the reconstructed image by using the second mode, setting the first flag to a value indicating to perform chroma information adjustment.

In an exemplary embodiment of this application, there is a plurality of second modes, and the first flag is used to indicate whether to use the second mode when NNLF is performed on the reconstructed picture;
where the operation of encoding the first flag of the reconstructed image includes:

in a case that it is determined to perform NNLF on the reconstructed image by using the first mode, setting the first flag to a value indicating not to use the second mode; and
in a case that it is determined to perform NNLF on the reconstructed image by using the second mode, setting the first flag to a value indicating to use the second mode, and encoding a second flag, where the second flag includes index information of one of the second mode with a minimum rate distortion cost.

An embodiment of this application provides a video encoding method applied to an encoding side, which mainly relates to NNLF processing. A second mode in this embodiment is a chroma information adjustment mode.

When loop filtering is performed on a reconstructed image and if a filter unit has a plurality of filters, processing is performed based on a specified order of the filters. When data input to an NNLF filter such as a reconstructed picture (which may be a filtered image output by another filter) is obtained, the following processing including step a) to step e) is performed.

In step a, it is determined, based on a sequence-level chroma information adjustment enable flag ca_enable_flag, whether NNLF allows chroma information adjustment in a current sequence; if ca_enable_flag is "1", chroma information adjustment processing is performed on the current sequence, and the processing proceeds to step b); or if ca_enable_flag is "0", the NNLF does not allow the chroma information adjustment in the current sequence, NNLF is performed on the reconstructed image by using a first mode, encoding of the first flag is skipped, and the processing ends.

In step b, NNFL is performed first on a reconstructed image of a current frame of the current sequence by using the first mode, that is, original input information is input to the model of the NNLF for filtering, to obtain a first filtered image from output of the model.

In step c, NNLF is then performed by using a second mode (a chroma information adjustment mode in this embodiment), that is, an order of a U component and a V component of the input reconstructed image is interchanged, and then the image is input into the model of the NNLF for filtering, to obtain a second filtered picture from the output of the model.

In step d, a rate distortion cost $C_{NNLF}$ is calculated based on a difference between the first filtered image and an original image, and a rate distortion cost $C_{CA}$ is calculated based on a difference between the second filtered image and the original image; the two rate distortion costs are compared, and if $C_{CA} < C_{NNLF}$, it is determined to perform NNLF on the reconstructed image by using the second mode, and the second filtered image is used as a filtered picture that is finally output after NNLF filtering is performed on the reconstructed image; or if $C_{CA} \geq C_{NNLF}$, it is determined to perform NNLF on the reconstructed image by using the first mode, and the first filtered image is used as a filtered image that is finally output after NNLF filtering is performed on the reconstructed image.

A calculation formula of the rate distortion cost in this embodiment is as follows:

$$\text{cost} = Wy * SSD(Y) + Wu * SSD(U) + Wv * SSD(V)$$

where SSD (*) represents solving an SSD for a color component; and Wy, Wu, and Wv respectively represent a weighted value of an SSD of a Y component, a U component, and a V component, for example, 10:1:1 or 8:1:1.

A calculation formula of the SSD is as follows:

$$SSD = \sum_{x=0}^{M} \sum_{y=0}^{N} |rec(x,y) - org(x,y)|^2$$

where M represents a length of the reconstructed image of the current frame, N represents a width of the reconstructed image of the current frame, and rec(x, y) and org(x, y) respectively represent pixel values of the reconstructed image and the original image at a pixel (x, y).

In step e, a first flag is encoded based on a mode used by the current frame (that is, a selected mode) to indicate whether to perform chroma information adjustment. In this case, the first flag may also be referred to as a chroma information adjustment enable flag picture_ca_enable_flag, and is used to indicate that chroma information adjustment needs to be performed when NNLF is performed on the reconstructed image.

If the processing on the current frame is completed, a reconstructed image of a next frame is loaded for processing in a same manner.

In this embodiment, NNLF processing is performed based on the reconstructed image of the current frame. In another embodiment, NNLF processing may be performed based on another encoding unit such as a block (such as a CTU) or a slice of the current frame.

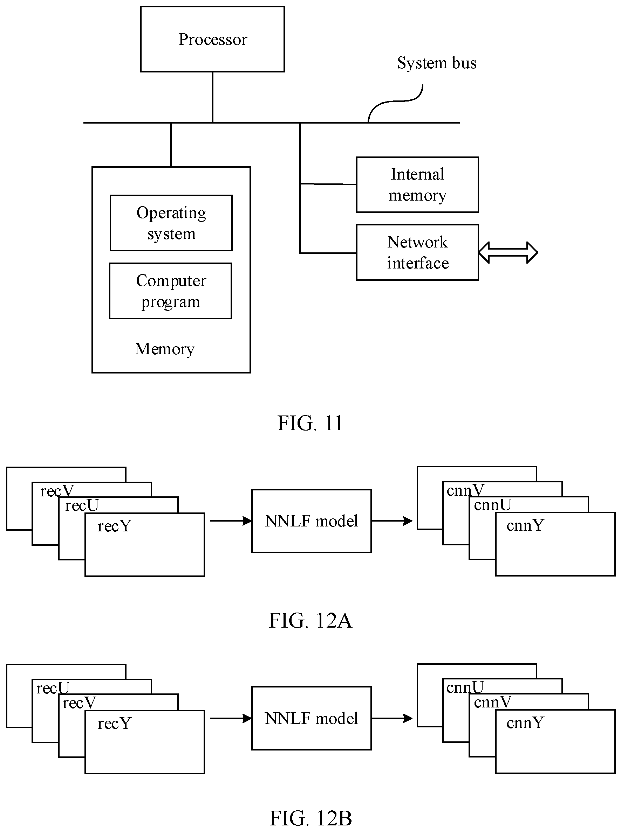

As shown in FIG. 12A, for an NNLF filter (an NNLF model in FIG. 12A), when the first mode is used, an arrangement order of input information of the NNLF filter may be {recY, recU, recV, predY, predU, predV, baseQP, sliceQP, slicetype, ...}, and an arrangement order of output information of the NNLF filter may be {cnnY, cnnU, cnnV}, where rec represents a reconstructed image, pred represents a predicted image, and cnn represents an output filtered image.

When the second mode in which chroma information adjustment is performed is used, an arrangement order of input information of the filter is adjusted to {recY, recV, recU, predY, predV, predU, baseQP, sliceQP, slicetype, ...}, and an arrangement order of output network information of the filter is adjusted to {cnnY, cnnV, cnnU}, as shown in FIG. 12B.

In this embodiment, generalization of the input of the NNLF is explored by adjusting the input order of the U component and the V component in the chroma information, thereby further improving filtering performance of the neural network. In addition, only a flag with a few bits needs to be encoded as a control switch, without affecting decoding complexity substantially.

In this embodiment, the decision is made based on a joint rate distortion cost for three components YUV of an image. In another embodiment, more refined processing may be performed; and for a component, rate distortion costs in different modes are separately calculated, and a mode with a minimum rate distortion cost is selected for use.

An embodiment of this application further provides a neural network based loop filter NNLF method, applied to a video decoding apparatus. As shown in FIG. 9, the method includes steps S310 and S320.

In step S310, a first flag of a reconstructed image is decoded, where the first flag includes information about an NNLF mode used when NNLF is to be performed on the reconstructed image.

In step S320, based on the first flag, the NNLF mode used when NNLF is to be performed on the reconstructed image is determined, and NNLF is performed on the reconstructed image based on the determined NNLF mode.

The NNLF mode includes a first mode and a second mode, the second mode includes a chroma information adjustment mode; and compared with the first mode, the chroma information adjustment mode includes processing of performing specified adjustment on input chroma information before filtering.

According to the neural network based loop filter method in this embodiment, a better mode is selected, by using the first flag, from the mode of performing chroma information adjustment and the mode of not performing chroma information adjustment, thereby enhancing a filtering effect of NNLF and thus improving quality of a decoded image.

In an exemplary embodiment of this application, the operation of performing the specified adjustment on the chroma information includes any one or more of:

interchanging an order of two chroma components of the reconstructed image; and
calculating a weighted average value and a square error value of the two chroma components of the reconstructed image, and using the weighted average value and the square error value as the input chroma information in the NNLF mode.

In an exemplary embodiment of this application, the reconstructed image is a reconstructed image of a current frame or a current slice or a current block.

In an exemplary embodiment of this application, the first flag is a picture-level syntax element or a block-level syntax element.

In an exemplary embodiment of this application, the second mode further includes a chroma information fusion mode, and training data used for training a model in the chroma information fusion mode includes expanded data obtained after the specified adjustment is performed on the chroma information of the reconstructed image in original data, or includes the original data and the expanded data; and a model used in the first mode is obtained through training by using the original data.

In an exemplary embodiment of this application, the second mode further includes a chroma information adjustment and fusion mode;

compared with the first mode, the chroma information adjustment and fusion mode includes processing of performing specified adjustment on input chroma information before filtering, and training data used for training a model in the chroma information fusion mode includes expanded data obtained after the specified adjustment is performed on the chroma information of the reconstructed image in original data, or includes the original data and the expanded data; and
a model used in the first mode is obtained through training by using the original data.

In an exemplary embodiment of this application, there is one first mode and there is one or more second modes; and network structures of models used in the first mode and the second mode are the same or different.

In an exemplary embodiment of this application, the second mode is a chroma information adjustment mode, and the first flag is used to indicate whether to perform chroma information adjustment when NNLF is performed on the reconstructed image; and the operation of determining, based on the first flag, the NNLF mode used when NNLF is to be performed on the reconstructed image includes: when the first flag indicates to perform chroma information adjustment, determining to use the second mode to perform NNLF on the reconstructed image, and when the first flag indicates not to perform chroma information adjustment, determining to use the first mode to perform NNLF on the reconstructed image.

In an example of this embodiment, a picture header is defined as follows:

| picture_header( ) { | Descriptor |
|---|---|

(continued)

| ... | ... |
|---|---|
| if(ca_enable_flag) { | |
|    picture_ca_enable_flag | u(1) |
| } | |
| | |
| ... | ... |

In the table, ca_enable_flag is a sequence-level chroma information adjustment enable flag. When ca_enable_flag is 1, the following semantics is defined: picture_ca_enable_flag represents a picture-level chroma information adjustment enable flag, that is, the foregoing first flag. When picture_ca_enable_flag is 1, it indicates that chroma information adjustment is to be performed when NNLF is performed on the reconstructed image, that is, the second mode is used (the chroma information adjustment mode in this embodiment); and when picture_ca_enable_flag is 0, it indicates that chroma information adjustment is not to be performed when NNLF is performed on the reconstructed image, that is, the first mode is used. When ca_enable_flag is 0, decoding and encoding of picture_ca_enable flag are skipped.

In an exemplary embodiment of this application, there is a plurality of second modes, and the first flag is used to indicate whether to use the second mode when NNLF is performed on the reconstructed image; and

the operation of determining, based on the first flag, the NNLF mode used when NNLF is performed on the reconstructed image includes:

when the first flag indicates not to use the second mode, determining to use the first mode to perform NNLF on the reconstructed image; and

when the first flag indicates to use the second mode, decoding a second flag, where the second flag includes index information of one of the second mode to be used; and determining, based on the second flag, to use the second mode to perform NNLF on the reconstructed image.

An embodiment of this application further provides a video decoding method, applied to a video decoding apparatus. The method includes: steps S410 and steps S420, as shown in FIG. 10.

In step S410, it is determined whether NNLF allows chroma information adjustment.

In step S420, in a case that the NNLF allows the chroma information adjustment, NNLF is performed on the reconstructed image by using the method applied to a decoding side according to any embodiment of this application.

According to the video decoding method in embodiments of this application, a better mode is selected, by using a first flag, from the mode of performing chroma information adjustment and the mode of not performing chroma information adjustment, thereby enhancing a filtering effect of NNLF and thus improving quality of a decoded image.

In an exemplary embodiment of this application, an operation of determining whether the NNLF allows the chroma information adjustment includes:

decoding a sequence-level chroma information adjustment enable flag to determine whether the NNLF allows the chroma information adjustment; or

decoding a picture-level chroma information adjustment enable flag to determine whether the NNLF allows the chroma information adjustment.

In an example in which the sequence-level chroma information adjustment enable flag is used, a sequence header of a video sequence is shown in the following table:

| sequence_header( ) { | **Descriptor** |
|---|---|
|    ... | |
|    ca_enable_flag | u(1) |
| | |
|    ... | |
| } | |

In the table, ca_enable_flag is the sequence-level chroma information adjustment enable flag.

In an exemplary embodiment of this application, the method further includes: in a case that the NNLF does not allow the chroma information adjustment, skipping decoding the first flag, and performing NNLF on the reconstructed image by using the first mode.

In this embodiment, a base tool NNLF1 is selected for comparison. On the basis of the NNLF1, mode selection processing including a chroma information adjustment mode is performed on an inter encoding frame (a non-I frame), and a common sequence specified by a joint video experts team (JVET: Joint Video Experts Team) is tested in random access (Random Access) and low delay (Low Delay) B configurations under a common test condition. An anchor (anchor) for comparison is the NNLF1, and results are shown in Table 1 and Table 2.

Table 1: Performance of this embodiment compared with the base NNLF1 in the random access configuration

| | Random access Main10 | | | | |
|---|---|---|---|---|---|
| | Over AHG11 reference software (NnlfOption=1) | | | | |
| | Y | U | V | EncT | DecT |
| Class A1 | 0.05% | -2.42% | -0.70% | 107% | 100% |
| Class A2 | -0.01% | -1.18% | -0.31% | 108% | 100% |
| Class B | -0.03% | -1.21% | -0.58% | 108% | 101% |
| Class C | -0.02% | -0.63% | -0.73% | 106% | 101% |
| Class E | | | | | |
| **Overall** | -0.01% | -1.29% | -0.59% | 107% | 101% |
| Class D | -0.03% | -0.19% | -1.52% | 107% | 101% |
| Class F | -0.03% | -0.31% | -0.69% | 110% | 108% |

Table 2: Performance of this embodiment compared with the base NNLF1 in the low delay B configuration

| | Low delay B Main10 | | | | |
|---|---|---|---|---|---|
| | Over AHG11 reference software (NnlfOption=1) | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.13% | -2.67% | -0.72% | 107% | 103% |
| Class C | -0.11% | -2.31% | -1.81% | 105% | 102% |
| Class E | -0.05% | -1.10% | -1.83% | 111% | 105% |
| **Overall** | -0.10% | -2.51% | -1.20% | 107% | 103% |
| Class D | -0.10% | -1.95% | -4.61% | 107% | 102% |
| Class F | -0.11% | -1.52% | -2.46% | 110% | 106% |

Meanings of the parameters in the tables are as follows:

EncT: Encoding Time, encoding time. 10X% represents that after a reference row sorting technology is integrated, an encoding time is 10X%, which indicates that there is an X% increase in the encoding time.
DecT: Decoding Time, decoding time. 10X% represents that after a reference row sorting technology is integrated, a decoding time is 10X%, which indicates that there is an X% increase in the decoding time.

ClassA1 and Class A2 are test video sequences with a resolution of 3840 x 2160, ClassB is a test sequence with a resolution of 1920 x 1080, ClassC is a test sequence with a resolution of 832 x 480, ClassD is a test sequence with a resolution of 416 x 240, and ClassE is a test sequence with a resolution of 1280 x 720; and ClassF is several screen content sequences (Screen content) with different resolutions.

Y, U, and V are three components of a color. Columns in which Y, U, and V are located indicate BD-rate (Bjøntegaard-Delta rate) indexes of a test result on Y, U, and V. A smaller value indicates better encoding performance.

It can be learned by analyzing the data in the two tables that encoding performance can be further improved on the basis of the NNLF1 by introducing an optimization method for chroma information adjustment, especially on a chroma component.

An NNLF mode may also be selected for an intra encoding frame (I frame) by using the method in this embodiment.

An embodiment of this application further provides a bitstream. The bitstream is generated by using the video encoding method according to any one of embodiments of this application.

As shown in FIG. 11, an embodiment of this application further provides a neural network based loop filter, including a processor and a memory storing a computer program, where the computer program is executed by the processor to implement the neural network based loop filter method according to any one of embodiments of this application. As shown in FIG. 11, the processor and the memory are connected through a system bus, and the loop filter may further include other components such as an internal memory and a network interface.

Referring to FIG. 11, an embodiment of this application further provides a video decoding apparatus, including a processor and a memory storing a computer program, where the computer program is executed by the processor to implement the video decoding method according to any one of embodiments of this application.

Referring to FIG. 11, an embodiment of this application further provides a video encoding apparatus, including a processor and a memory storing a computer program, where the computer program is executed by the processor to implement the video encoding method according to any one of embodiments of this application.

The processor in the above embodiment of this application may be a general-purpose processor, including a central processing unit (CPU), a network processor (Network Processor, NP for short), a microprocessor, or the like, or may be another conventional processor. The processor may alternatively be a digital signal processor (DSP), an application-specific integrated circuit (ASIC), a field programmable gate array (FPGA), a discrete logic or another programmable logic device, a discrete gate or transistor logic device, a discrete hardware component, another equivalent integrated or discrete logic circuit, or a combination thereof. In other words, the processor in the above embodiment may be any processing device or a combination of devices that implement the methods, steps, and logic diagrams disclosed in embodiments of this application. If the embodiments of this application are partially implemented in software, instructions for the software may be stored in a suitable non-volatile computer-readable storage medium, and the instructions may be executed in hardware by one or more processors to implement the methods in embodiments of this application. The term "processor" used herein may refer to the structure described above or any other structure suitable for implementing the techniques described herein.

Referring to FIG. 1A, an embodiment of this application further provides a video coding system, including the video encoding apparatus according to any one of embodiments of this application and the video decoding apparatus according to any one of embodiments of this application.

An embodiment of this application further provides a non-transitory computer-readable storage medium. The computer-readable storage medium stores a computer program, and the computer program is executed by a processor to implement the neural network based loop filter method according to any one of embodiments of this application, or to implement the video decoding method according to any one of embodiments of this application, or to implement the video encoding method according to any one of embodiments of this application.

In one or more exemplary embodiments above, the functions described may be implemented in hardware, software, firmware, or any combination thereof. If the embodiments are implemented in software, functionality may be stored as one or more instructions or code on a computer-readable medium or transmitted via a computer-readable medium and executed by a hardware-based processing unit. The computer-readable medium may include a computer-readable storage medium corresponding to a tangible medium, such as a data storage medium, or a communication medium that facilitates transfer of a computer program, for example, from one location to another according to a communication protocol. In this way, the computer-readable medium may generally correspond to a non-transitory tangible computer-readable storage medium or a communication medium such as a signal or a carrier. The data storage medium may be any available medium that may be accessed by one or more computers or one or more processors to retrieve instructions, code, and/or data structures for implementing the techniques described in the embodiments of this application. A computer program product may include a computer-readable medium.

By way of example instead of limitation, such a computer-readable storage medium may include a RAM, a ROM, an EEPROM, a CD-ROM, or other optical disk storage apparatuses, magnetic disk storage apparatuses, or other magnetic storage apparatuses, a flash memory, or any other medium that can be used to store desired program code in the form of instructions or data structures and that can be accessed by a computer. In addition, any connection may be referred to as a computer-readable medium. For example, if instructions are transmitted from a web site, a server, or other remote sources using a coaxial cable, a fiber optic cable, a twisted pair, a digital subscriber line (DSL), or wireless technologies such as infrared rays, radio, and microwaves, the coaxial cable, the fiber optic cable, the twisted pair, the DSL, or the wireless technologies such as infrared rays, radio, and microwaves are included in the definition of the medium. However, it should be understood that the computer-readable storage medium and the data storage medium do not include connections, carriers, signals, or other temporary (transient) media, but refer specifically to non-transitory tangible storage media. As used herein, disks and optical discs include compact discs (CD), laser discs, optical discs, digital versatile discs (DVD), floppy disks, Blu-ray discs, and the like. In these cases, disks generally regenerate data magnetically, while optical discs regenerate data optically using lasers. A combination of the above should also be included within the range of the computer-readable medium.

**Claims**

1. A neural network based loop filter NNLF method, applied to a video decoding apparatus, wherein the method comprises:

   decoding a first flag of a reconstructed image, wherein the first flag comprises information about an NNLF mode used when NNLF is to be performed on the reconstructed image; and
   determining, based on the first flag, the NNLF mode used when NNLF is to be performed on the reconstructed image, and performing NNLF on the reconstructed image based on the determined NNLF mode,
   wherein the NNLF mode comprises a first mode and a second mode, the second mode comprises a chroma information adjustment mode; and compared with the first mode, the chroma information adjustment mode comprises processing of performing specified adjustment on input chroma information before filtering.

2. The method according to claim 1,
   wherein the performing the specified adjustment on the chroma information comprises any one or more of:

   interchanging an order of two chroma components of the reconstructed image; and
   calculating a weighted average value and a square error value of the two chroma components of the reconstructed image, and using the weighted average value and the square error value as the input chroma information in the NNLF mode.

3. The method according to claim 1,
   wherein the reconstructed image is a reconstructed image of a current frame or a current slice or a current block, and the first flag is a picture-level syntax element or a block-level syntax element.

4. The method according to claim 1 or 2,

   wherein the second mode further comprises a chroma information fusion mode, and training data used for training a model used in the chroma information fusion mode comprises expanded data obtained after the specified adjustment is performed on the chroma information of the reconstructed image in original data, or comprises the original data and the expanded data; and
   a model used in the first mode is obtained through training by using the original data.

5. The method according to claim 1 or 2,

   wherein the second mode further comprises a chroma information adjustment and fusion mode;
   compared with the first mode, the chroma information adjustment and fusion mode comprises processing of performing specified adjustment on input chroma information before filtering, and training data used for training a model used in the chroma information fusion mode comprises expanded data obtained after the specified adjustment is performed on the chroma information of the reconstructed image in original data, or comprises the original data and the expanded data; and
   a model used in the first mode is obtained through training by using the original data.

6. The method according to claim 1,
   wherein there a quantity of the first mode is equal to one and a quantity of the second mode is equal to or grater than one; and network structures of models used in the first mode and the second mode are the same or different.

7. The method according to claim 1,

   wherein the second mode is a chroma information adjustment mode, and the first flag is used to indicate whether to perform chroma information adjustment when NNLF is to be performed on the reconstructed image;
   wherein the determining, based on the first flag, the NNLF mode used when NNLF is to be performed on the reconstructed image comprises: when the first flag indicates to perform chroma information adjustment, determining to use the second mode to perform NNLF on the reconstructed image; and when the first flag indicates not to perform chroma information adjustment, determining to use the first mode to perform NNLF on the reconstructed image.

8. The method according to claim 1,

wherein a quantity of the second mode is greater than one, and the first flag is used to indicate whether to use the second mode when NNLF is to be performed on the reconstructed image;
wherein the determining, based on the first flag, the NNLF mode used when NNLF is to be performed on the reconstructed image comprises:

when the first flag indicates not to use the second mode, determining to use the first mode to perform NNLF on the reconstructed image; and
when the first flag indicates to use the second mode, decoding a second flag, wherein the second flag comprises index information of one of the second mode to be used; and determining, based on the second flag, to use the second mode to perform the NNLF on the reconstructed image.

9. A video decoding method, applied to a video decoding apparatus, wherein the method comprises:
in a case that NNLF allows chroma information adjustment, performing NNLF on the reconstructed image by using the method according to any one of claims 1 to 8.

10. The method according to claim 9,
determining whether the NNLF allows the chroma information adjustment comprises:

decoding a sequence-level chroma information adjustment enable flag, to determine whether the NNLF allows the chroma information adjustment; or
decoding a picture-level chroma information adjustment enable flag, to determine whether the NNLF allows the chroma information adjustment.

11. The method according to claim 9, wherein the method further comprises:
in a case that the NNLF does not allow the chroma information adjustment, skipping decoding the first flag, and performing NNLF on the reconstructed image by using the first mode.

12. A neural network based loop filter NNLF method, applied to a video encoding apparatus, wherein the method comprises:

calculating a rate distortion cost of performing NNLF on an input reconstructed image by using a first mode and a rate distortion cost of performing NNLF on the reconstructed image by using a second mode; and
determining to perform NNLF on the reconstructed image by using a mode with a minimum rate distortion cost among the first mode and the second mode,
wherein both the first mode and the second mode are specified NNLF modes, the second mode comprises a chroma information adjustment mode; and compared with the first mode, the chroma information adjustment mode comprises processing of performing specified adjustment on input chroma information before filtering.

13. The method according to claim 12,
wherein the performing the specified adjustment on the chroma information comprises any one or more of:

interchanging an order of two chroma components of the reconstructed image; and
calculating a weighted average value and a square error value of the two chroma components of the reconstructed image, and using the weighted average value and the square error value as the input chroma information in the NNLF mode.

14. The method according to claim 12,
wherein the reconstructed image is a reconstructed image of a current frame or a current slice or a current block, and network structures of models used in the first mode and the second mode are the same or different.

15. The method according to claim 12 or 13,

wherein the second mode further comprises a chroma information fusion mode, and training data used for training a model in the chroma information fusion mode comprises expanded data obtained after the specified adjustment is performed on the chroma information of the reconstructed image in original data, or comprises the original data and the expanded data; and
a model used in the first mode is obtained through training by using the original data.

16. The method according to claim 12 or 13,

wherein the second mode further comprises a chroma information adjustment and fusion mode;
compared with the first mode, the chroma information adjustment and fusion mode comprises processing of performing specified adjustment on input chroma information before filtering, and training data used for training a model in the chroma information fusion mode comprises expanded data obtained after the specified adjustment is performed on the chroma information of the reconstructed picture in original data, or comprises the original data and the expanded data; and
a model used in the first mode is obtained through training by using the original data.

17. The method according to claim 12,

wherein a quantity of the first mode is equal to one, and a quantity of the second mode is equal to one or greater than one;
wherein the calculating the rate distortion cost $cost_1$ of performing NNLF on the input reconstructed image by using the first mode comprises: obtaining a first filtered picture that is output after NNLF is performed on the reconstructed image by using the first mode, and calculating $cost_1$ based on a difference between a first filtered image and a corresponding original picture;
wherein the calculating the rate distortion cost $cost_2$ of performing NNLF on the reconstructed image by using the second mode comprises: for one of the second mode, obtaining a second filtered picture that is output after NNLF is performed on the reconstructed image by using the second mode, and calculating $cost_2$ of the second mode based on a difference between the second filtered picture and the original picture.

18. The method according to claim 17, wherein the method further comprises:
using a filtered picture obtained by performing NNLF on the reconstructed picture by using a mode with a minimum rate distortion cost, as a filtered picture that is output after NNLF is performed on the reconstructed image.

19. A video encoding method, applied to a video encoding apparatus, wherein the method comprises:

in a case that NNLF allows chroma information adjustment, performing NNLF on the reconstructed image by using the method according to any one of claims 12 to 18; and
encoding a first flag of the reconstructed image, wherein the first flag comprises information about an NNLF mode used when NNLF is to be performed on the reconstructed image.

20. The method according to claim 19,
wherein the first flag is a picture-level syntax element or a block-level syntax element.

21. The method according to claim 19, wherein determining whether the NNLF allows the chroma information adjustment comprises:

decoding a sequence-level chroma information adjustment enable flag to determine whether the NNLF allows the chroma information adjustment; or
decoding a picture-level chroma information adjustment enable flag to determine whether the NNLF allows the chroma information adjustment.

22. The method according to claim 19, wherein the method further comprises:
in a case that it is determined that the NNLF does not allow the chroma information adjustment, performing NNLF on the reconstructed image by using the first mode, and skipping encoding the chroma information adjustment enable flag.

23. The method according to claim 19,

wherein the second mode is a chroma information adjustment mode, and the first flag is used to indicate whether to perform chroma information adjustment when NNLF is to be performed on the reconstructed image; wherein the encoding the first flag of the reconstructed image comprises: in a case that it is determined to perform NNLF on the reconstructed image by using the first mode, setting the first flag to a value indicating not to perform chroma information adjustment; and in a case that it is determined to perform NNLF on the reconstructed image by using the second mode, setting the first flag to a value indicating to perform chroma information adjustment.

24. The method according to claim 19,

wherein a quantity of the second mode is greater than one, and the first flag is used to indicate whether to use the second mode when NNLF is to be performed on the reconstructed image; wherein the encoding the first flag of the reconstructed image comprises:

in a case that it is determined to perform NNLF on the reconstructed image by using the first mode, setting the first flag to a value indicating not to use the second mode; and in a case that it is determined to perform NNLF on the reconstructed image by using the second mode, setting the first flag to a value indicating to use the second mode, and encoding a second flag, wherein the second flag comprises index information of one of the second mode with a minimum rate distortion cost.

25. A bitstream, wherein the bitstream is generated by using the video encoding method according to any one of claims 19 to 24.

26. A neural network based loop filter, comprising a processor and a memory storing a computer program, wherein the computer program is executed by the processor to implement the neural network based loop filter method according to any one of claims 1 to 8 and claims 12 to 18.

27. A video decoding apparatus, comprising a processor and a memory storing a computer program, wherein the computer program is executed by the processor to implement the video decoding method according to any one of claims 9 to 11.

28. A video encoding apparatus, comprising a processor and a memory storing a computer program, wherein the computer program is executed by the processor to implement the video encoding method according to any one of claims 19 to 24.

29. A video coding system, comprising the video encoding apparatus according to claim 28 and the video decoding apparatus according to claim 27.

30. A non-transient computer-readable storage medium, wherein the computer-readable storage medium stores a computer program, and the computer program is executed by a processor to implement the neural network based loop filter method according to any one of claims 1 to 8 and claims 12 to 18, or to implement the video decoding method according to any one of claims 9 to 11, or to implement the video encoding method according to any one of claims 19 to 24.

FIG. 1A

FIG. 1B

**Video decoding apparatus 15**

Prediction unit 152

Inter prediction unit 162

Intra prediction unit 164

Encoded video bitstream → Entropy decoding unit 150

Dequantization unit 154 → Inverse transform processing unit 155

**15 8**

Filter unit 159

Decoded image buffer 160

Decoded video frame sequence

FIG. 1C

Reconstructed picture

Deblocking filter (DBF) — 20

Sample adaptive offset filter (SAO) — 22

Neural network based loop filter (NNLF) — 24

Adaptive loop filter (ALF) — 26

Filtered reconstructed image

FIG. 2

FIG. 3A

FIG. 3B

FIG. 3C

FIG. 4A

FIG. 4B

FIG. 4C

FIG. 5

Calculate a rate distortion cost of performing NNLF on an input reconstructed image by using a first mode and a rate distortion cost of performing NNLF on the reconstructed image by using a second mode

S110

Determine to perform NNLF on the reconstructed image by using a mode with a minimum rate distortion cost among the first mode and the second mode

S120

FIG. 6

Reconstructed image

DBF

SAO

NNLF-A

NNLF-B
(RO)

ALF

Reconstructed image
subjected to loop filtering

FIG. 7

S210

In a case that NNLF allows chroma information adjustment, perform NNLF on a reconstructed image by using any NNLF method applied to an encoding side according to this application

S220

Encode a first flag of the reconstructed image, where the first flag includes information about an NNLF mode used when NNLF is to be performed on the reconstructed image

FIG. 8

S310

Decode a first flag of a reconstructed Image, where the first flag includes information about an NNLF mode used when NNLF is to be performed on the reconstructed image

S320

Determine, based on the first flag, the NNLF mode used when NNLF is to be performed on the reconstructed image, and perform NNLF on the reconstructed image based on the determined NNLF mode

FIG. 9

S210

Determine whether NNLF allows chroma information adjustment

S220

In a case that the NNLF allows the chroma information adjustment, perform NNLF on a reconstructed Image by using the method applied to a decoding side according to any embodiment of this application

FIG. 10

FIG. 11

FIG. 12A

FIG. 12B

# EP 4 604 524 A1

## INTERNATIONAL SEARCH REPORT

| International application No. |
| --- |
| **PCT/CN2022/125229** |

| A. | CLASSIFICATION OF SUBJECT MATTER |
| --- | --- |

H04N19/117(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, WOTXT, USTXT, EPTXT, IEEE, JVET, CNKI: 神经网络, 环路滤波, 标志, 色度, 调整, 交换, 顺序, 分量, 加权平均, 平方误差和, NNLF, neural network, in-loop filtering, flags, chroma, adjustment, switch, order, component, weighted average, squared error, SSD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114208203 A (INTEL CORP.) 18 March 2022 (2022-03-18) entire document | 1-24, 26-30 |
| A | CN 113489977 A (ZHEJIANG DAHUA TECHNOLOGY CO., LTD.) 08 October 2021 (2021-10-08) entire document | 1-24, 26-30 |
| A | US 2022286695 A1 (LEMON INC.) 08 September 2022 (2022-09-08) entire document | 1-24, 26-30 |
| A | US 2019273948 A1 (INTEL CORP.) 05 September 2019 (2019-09-05) entire document | 1-24, 26-30 |
| A | WANG, Liqiang et al. "EE1-1.4: Neural Network Based In-Loop Filter with 2 Models" *Joint Video Experts Team (JVET) of ITU-T SG 16 WP 3 and ISO/IEC JTC 1/SC 29, 27th Meeting, by Teleconference, 13-22 July 2022, JVET-AA0087-v3*, 15 July 2022 (2022-07-15), entire document | 1-24, 26-30 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 July 2023** | **12 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/125229** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WANG, Liqiang et al. "EE1-1.5: Neural Network Based In-Loop Filter with a Single Model" *Joint Video Experts Team (JVET) of ITU-T SG 16 WP 3 and ISO/IEC JTC 1/SC 29, 27th Meeting, by Teleconference, 13-22 July 2022, JVET-AA0088-v5*, 15 July 2022 (2022-07-15), entire document | 1-24, 26-30 |

Form PCT/ISA/210 (second sheet) (July 2022)

**INTERNATIONAL SEARCH REPORT**

| International application No. |
| --- |
| **PCT/CN2022/125229** |

**Box No. II    Observations where certain claims were found unsearchable (Continuation of item 2 of first sheet)**

This international search report has not been established in respect of certain claims under Article 17(2)(a) for the following reasons:

1. ☑ Claims Nos.: **25**
   because they relate to subject matter not required to be searched by this Authority, namely:

   The subject matter of claim 25 is "a code stream", which belongs to mere presentations of information, and therefore belongs to subject matter for which no search is required by the International Searching Authority.

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/CN2022/125229**

| Patent document cited in search report | | | Publication date (day/month/year) | Patent family member(s) | | | Publication date (day/month/year) |
|---|---|---|---|---|---|---|---|
| CN | 114208203 | A | 18 March 2022 | None | | | |
| CN | 113489977 | A | 08 October 2021 | None | | | |
| US | 2022286695 | A1 | 08 September 2022 | None | | | |
| US | 2019273948 | A1 | 05 September 2019 | US | 2021250620 | A1 | 12 August 2021 |
| | | | | US | 11438632 | B2 | 06 September 2022 |
| | | | | US | 10999606 | B2 | 04 May 2021 |
| | | | | DE | 102019218837 | A1 | 09 July 2020 |

Form PCT/ISA/210 (patent family annex) (July 2022)